# EUROPEAN PATENT APPLICATION

(11) **EP 4 635 642 A1**
(43) Date of publication of application: **22.10.2025**
(21) Application number: 24290011.6
(22) Date of filing: 16.04.2024
(51) Int. Cl.: B09B 3/30, B03B 9/06, B09B 3/35, C04B 18/167, C04B 20/00, C04B 20/02, C04B 28/04, B02C 17/16, B09B 101/45

(54) **METHOD OF PROCESSING CONSTRUCTION DEMOLITION MATERIAL**

(71) Applicant: Holcim Technology Ltd, 6300 Zug (CH)
(72) Inventor: Majoulet, Olivier, 38070 Saint-Quentin-Fallavier (FR); Faure, Jean-Michel, 38070 Saint-Quentin-Fallavier (FR); Heitzmann, Daniel, 38070 Saint-Quentin-Fallavier (FR)
(74) Representative: SONN Patentanwälte GmbH & Co KG

(57) **Abstract**

A method of processing construction demolition material to obtain particles having a high CaO/SiO₂ weight ratio, comprising the steps of:
a) providing input particles obtained by crushing construction demolition material,
b) subjecting the input particles to autogenous attrition in an attrition scrubber to obtain output particles comprising a fine fraction of output particles and a coarse fraction of output particles, said fine fraction having an increased CaO/SiO₂ weight ratio when compared to the coarse fraction,
c) separating the fine fraction from the coarse fraction by means of a separator.

## Description

The invention refers to a method of processing construction demolition material to obtain particles having a high CaO/SiO₂ weight ratio.

In the past few years, the recycling of construction demolition wastes for being re-used in the production of cement of concrete compositions has gradually been increasing. In its efforts to reduce the use of virgin materials for the production of cement and concrete, the construction materials industry has developed several solutions that attempt to maximize the substitution of Portland clinker in cement compositions, or the substitution of limestone and clay in clinker raw meal compositions.

Incorporating construction demolition wastes in cement production can significantly reduce CO₂ emissions associated with the cement manufacturing process. This is achieved through reduced limestone calcination, as well as the use of an industrial byproduct, which would otherwise require disposal or long-term storage.

Construction demolition wastes are a mixture of different materials that come from the demolition site of an old construction. It is typically composed of concrete demolition wastes, plasterboards, bricks, steel, wood, tiles or glass. The common practice is to sort these materials in recycling centers, so as to separate the materials listed above to reuse them in applications for which their chemical composition is most suitable.

These demolition wastes are classified under different waste codes of the European Waste Catalogue (EWC) depending on its composition and potential contamination. The EWC is a hierarchical list of waste descriptions established by EU Commission decision 2000/532/EC2. Construction and demolition wastes fall under chapter 17 of the EWC. Concrete demolition wastes fall under sub-chapter 17 01 und comprises the following waste codes:
- 17 01 01: concrete
- 17 01 02: bricks
- 17 01 03: tiles and ceramics
- 17 01 06: mixtures of, or separate fractions of concrete, bricks, tiles and ceramics containing hazardous substances
- 17 01 07: mixtures of concrete, bricks, tiles and ceramics other than those mentioned in 17 01 06

Other sub-chapters comprise wood, glass and plastic (17 02), bituminous mixtures, coal tar and tarred products (17 03), metals (17 04), soil (17 05), and other fractions (17 06 - 17 09).

Construction demolition waste typically contains calcium oxides, silicon dioxide, aluminium oxides, and oxides that are present in a plurality of entangled solid domains within the construction demolition waste. Different solid domains would have different contents of calcium oxides, silicon dioxide, aluminium oxides, or calcium silicates, depending mainly on their origin. These solid domains can in fact originate from the sand or aggregates initially present in the concrete fraction of the construction demolition waste, or from the hardened cement paste, or masonry bricks.

One limitation in the recycling of construction demolition wastes is that the total amount of calcium, coming from calcium silicates or calcium oxides, is too low, and the amount of silicon is too high to be used in the production of Portland cements. In fact, in the production of Portland clinker, a raw meal composition is prepared in such a way that the proportions of calcium oxide, aluminium oxides, silicon dioxides and iron oxides are suitable for the formation of the mineral phases of Portland clinker in the cement kiln, namely alite, belite, calcium aluminates and alumino-ferrites. The lower amount of calcium in construction demolition wastes also limits its use as a mineral component in Portland cement compositions, as it is well known that mineral components with higher total calcium oxide compositions have higher reactivity.

It has already been proposed to subject construction demolition waste to crushing in order to separate the waste into different fractions. The products obtained from the crushing of concrete demolition waste are mainly crushed aggregates and hardened cement paste. While coarse aggregates can be recovered with a low amount of cement paste attached by means of various crushing equipment, such as horizontal/vertical shaft impactors or cone crushers, these process steps generate a high proportion of a fine fraction having a particle size of below 4mm or 6mm. These fines contain the sand fraction of the processed concrete with a high share of the initial cement paste attached to their surface, making them very complicated to recycle as aggregates in concrete because of a higher water and additive demand.

Recycling these fines as a natural sand replacement in concrete does not take advantage of the high amount of calcium oxide that could be used in cement manufacture, e.g. in the raw mix or as a supplementary cementitious material.

It is therefore desirable to separate the hardened cement paste from the fines described above to obtain a material with a high CaO/SiO2 weight ratio.

In order to solve this object, the invention provides a method of processing construction demolition material to obtain particles having a high CaO/SiO₂ weight ratio, comprising the steps of:
a) providing input particles obtained by crushing construction demolition material,
b) subjecting the input particles to autogenous attrition in an attrition scrubber to obtain output particles comprising a fine fraction of output particles and a coarse fraction of output particles, said fine fraction having an increased CaO/SiO₂ weight ratio when compared to the coarse fraction,
c) separating the fine fraction from the coarse fraction by means of a separator.

The invention is based on the observation that subjecting the input particles to autogenous attrition in an attrition scrubber results in a fragmentation of the particles along the phase boundaries so as to obtain silicon dioxide rich particles on the one hand, namely a fine fraction mainly composed of cement paste, and calcium rich particles on the other hand, namely a coarse fraction composed of sand particles which have been cleaned of a good part of the cement paste.

The application of attrition stress takes advantage of the fact that the individual phases of the feed particles have different hardness and compressive strength properties. In general, if the material is composed of two phases (A) and (B), fragmentation will first occur within the most brittle phase (A), producing grains composed of phase (A) on one side and grains composed of a harder phase core (B) surrounded by the remaining phase (A) on the other side. When attrition stress is applied, the surface abrasion involved in particle-particle contact 'peel' the remaining brittle (A) phase from the (B) core. In concrete demolition waste or other feed materials, the calcium-based phase, i.e. the hardened cement paste, is generally more brittle and tends to be more easily crushed. Calcium oxide and calcium silicates have a crystalline structure which makes them more susceptible to fracture and comminution during the crushing step. As a result, the process achieves a high selectivity between calcium-rich and silica-rich particles.

The hardened cement paste is concentrated in the fine fraction obtained by the attrition step and the sand is concentrated in the coarse fraction.

Preferably, the fine fraction has a CaO/SiO₂ weight ratio > 0,5. preferably > 0.6.

According to the invention, the autogenous attrition step is carried out in an attrition scrubber. As used herein, the term "attrition scrubber" refers to an apparatus comprising at least one attrition cell and at least one impeller arranged to rotate in the at least one attrition cell. The rotating impeller causes the input particles to rub against each other, thereby subjecting the particles to attritional stress.

The use of an attrition scrubber has several advantages over other grinding equipment such as a ball mill. In a ball mill, the feed material must be relatively dry (<7 wt. -% free water) to avoid sticking in the grinding chamber. However, construction demolition waste is usually stored in the open without any particular care, so it would need to be dried before being fed into a ball mill.

While attrition can occur in a ball mill system at low speeds, e.g. below 35% of the critical speed and with small diameter balls, such conditions are usually out of specification for industrial mills and require modification of existing systems or custom manufacture.

In contrast, attrition cells are widely available industrial equipment and can process moist or wet material.

According to a preferred embodiment of the invention, the input particles are subjected to step b) in the form of an input material having a water content of < 30 wt.-%, preferably 7-30 wt.-%, more preferably 13-22 wt.-%. Thus, input material having a wide range of water content can be processed by means of the method of the invention. Preferably, the input material consists of only the input particles and water.

With respect to the water content, it has been observed that the concentration of calcium-rich particles in the fine fraction may be increased by adjusting the water content to specific ranges. In particular, an optimum was obtained with an input material having a water content of 13-22 wt.-%, such as a water content of 15 wt.-% or 20 wt.-%.

In order to adjust the water content to the desired level, a preferred embodiment provides that, prior to step b), the input particles are mixed with water in order to obtain a water content of the input material of < 30 wt.-%, preferably 5-30 wt.-%, more preferably 13-22 wt.-%.

As mentioned above, the input particles that are subjected to autogenous attrition according to the invention are obtained by crushing construction demolition material. Calcium-rich particles may preferably be obtained by processing the fines that are obtained from crushing construction demolition material, said fines having a high proportion of sand with hardened cement paste adhering to the surface of the sand. Therefore, according to a preferred embodiment, only the fines obtained from crushing construction demolition material are subjected to step b) of the method of the invention. In other words, the input particles preferably have a maximum particle size of 10mm, preferably 6mm or 4mm.

With regard to the output particles of the attrition step of the invention, the fine fraction obtained by the autogenous attrition has a higher CaO/SiO₂ weight ratio when compared to the coarse fraction, so that said fine fraction is separated from the coarse fraction by means of a separator. It has been observed that the CaO/SiO₂ weight ratio varies depending on the particle size of the output particles. In particular, it was observed that a particularly high CaO/SiO₂ weight ratio can be found in very small output particles. Therefore, according to a preferred embodiment of the invention, the fine fraction that is separated from the coarse fraction has a particle size of < 250 pm, preferably < 125 pm, more preferably < 63 µm.

The fine fraction may constitute only a small proportion of the total mass of the output particles, i.e. the particles obtained as a result of the attrition step. The output particles can be characterized by a particle size distribution, preferably a distribution having a D10 of < 250 pm, measured by laser diffraction.

Separation of the fine fraction of the output particles from the coarse fraction can be accomplished by any suitable separator and any suitable size-based separation technique. Suitable separation techniques include cyclone separation and screening.

After the separation step, the coarse fraction may preferably be recirculated to the attrition scrubber and again subjected to autogenous attrition according to step b).

According to a preferred embodiment of the invention, the construction waste is concrete demolition waste. Concrete demolition waste is defined according to EWC waste code 17 01, in particular 17 01 01 and/or 17 01 07.

Where the description of the invention refers to concrete demolition waste, such description equally applies to any concrete material that contains crystallised calcium based mineral phases.

In this connection, a preferred embodiment of the invention provides that the concrete demolition waste comprises:
∘ ≥ 90 wt.-% of concrete, concrete products, mortar, concrete masonry units, unbound aggregate, natural stone, and/or hydraulically bound aggregate; and
∘ ≤ 10 wt.-% of clay masonry units (i.e., bricks and tiles), calcium silicate masonry units, and/or aerated non-floating concrete.

In addition, the concrete demolition material may further comprise up to 20 wt.-% of contaminants (metals, wood, plastics, plasterboards, etc.).

As to the mineralogical composition of the concrete demolition material, a preferred embodiment of the invention provides that the concrete demolition material comprises ≥ 20 wt.-% calcite and ≤ 40 wt.-% quartz, measured by the XRD Rietveld method.

More specifically, the concrete demolition material may preferably comprise:
- 20-35 wt.-% silicates, such as quartz and feldspars (albite, anorthite, orthoclase, microcline),
- 25-45 wt.-% carbonates, such as calcite and dolomite,
- 25-35 wt.-% of an amorphous/microcrystalline fraction, and
- optionally 1-5 wt.-% sheet silicates, such as muscovite and biotite.

The attrition step can be carried out in any attrition scrubber comprising at least one attrition cell and at least one impeller arranged to rotate in said at least one attrition cell. Preferably, two or more attrition cells can be arranged in parallel. Further, an attrition cell may comprise two or more impellers arranged coaxially or parallel to each other. In the case of two or more impellers, the impellers may be driven to rotate in the same direction or in opposite directions.

The impeller of the attrition scrubber comprises several blades that can have different configurations. The impeller can be designed as a paddlewheel having blades extending parallel to the axis of rotation, or as a propeller comprising radiating blades that are set at a pitch.

Preferably, the at least one impeller is driven to rotate at 5-1200 rpm, preferably 400-600 rpm.

According to a second aspect, the invention refers to the use of an attrition scrubber for processing construction demolition material to obtain particles having a high CaO/SiO₂ weight ratio.

According to a third aspect, the invention refers to the use of the fine fraction obtained from the method according to the first aspect of the invention as a component in Portland cements, or as a component of a raw meal mixture for the preparation of Portland clinker.

In the following, the invention will be described with reference to experiments conducted with a ball mill (reference example) and with an attrition cell (example according to the invention).

### Reference examples

A ball mill with a diameter of 51.5 cm and a length of 46.5 cm was used. Concrete demolition waste was fed into the mill together with the grinding media at a material to ball weight ratio of 1:10. Steel balls with a diameter of 20 mm were used as grinding media. Grinding was carried out at 20°C and a relative humidity of the process air of 75%.

Grinding was performed at different rotational speeds. The conditions are given as a percentage of the critical speed. The critical speed may be calculated with the formula Nc(rpm) ≈ 42.3/√(D), where D is the diameter of the mill in meters. The grinding experiments were carried out at a constant speed of 23% of the critical speed. This was chosen to achieve a defined grinding energy.

The cement paste concentration is calculated according to the "GranDuBé" recipe and is expressed as a percentage by weight.

Table 1 gives the composition of the concrete demolition waste used for the examples, obtained by X-ray fluorescence, by particle size fraction.

**Table 1.**

| PSF [µm] | WF (%) | LOI 950°C (%) | SiO₂ (%) | Al₂O₃ (%) | Fe₂O₃ (%) | CaO (%) | MgO (%) | K₂O (%) | Na₂O (%) | SO₃ (%) | CaO/ SiO₂ | CPC |
|---|---|---|---|---|---|---|---|---|---|---|---|---|
| <63 | 4,44 | 19,5 | 43,5 | 5,0 | 2,9 | 24,5 | 0,9 | 1,0 | 0,6 | 0,8 | **0,56** | **30** |
| 63-125 | 3,06 | 16,9 | 50,2 | 4,5 | 2,6 | 21,6 | 0,8 | 1,0 | 0,6 | 0,6 | **0,43** | **26** |
| 125-250 | 7,25 | 15,3 | 55,1 | 4,1 | 2,1 | 19,7 | 0,7 | 1,0 | 0,5 | 0,4 | **0,36** | **22** |
| 250-6000 | 85,25 | 17,3 | 53,3 | 3,0 | 1,2 | 22,0 | 0,5 | 0,9 | 0,4 | 0,2 | **0,41** | **15** |

| | | | | | | | | | | | | |
|---|---|---|---|---|---|---|---|---|---|---|---|---|
| PSF: Particle size fraction in µm WF: Proportion of PSF by weight CPC: Cement paste concentration by weight | | | | | | | | | | | | |

### Reference Example 1:

The concrete demolition waste according to Table 1 was processed in a ball mill at a grinding energy of 1kWh/t. Table 2 gives the composition of the ground output material by particle size fraction.

**Table 2:**

| PSF [µm] | WF (%) | LOI 950°C (%) | SiO₂ (%) | Al₂O₃ (%) | Fe₂O₃ (%) | CaO (%) | MgO (%) | K₂O (%) | Na₂O (%) | SO₃ (%) | CaO/ SiO₂ | CPC |
|---|---|---|---|---|---|---|---|---|---|---|---|---|
| <63 | 10,75 | 20,69 | 39,97 | 4,93 | 2,84 | 26,82 | 1 | 0,97 | 0,53 | 0,89 | **0,67** | **35** |
| 63-125 | 5,80 | 17,8 | 47,77 | 4,41 | 2,25 | 23,47 | 0,84 | 1,01 | 0,55 | 0,66 | **0,49** | **29** |
| 125-250 | 9,41 | 14,47 | 57,64 | 3,83 | 1,72 | 18,52 | 0,59 | 1,04 | 0,52 | 0,33 | **0,32** | **19** |
| 250-6000 | 74,05 | 16,02 | 56,69 | 2,54 | 1,56 | 20,35 | 0,44 | 0,76 | 0,38 | 0,15 | **0,36** | **14** |

### Reference Example 2:

The concrete demolition waste according to Table 1 was processed in a ball mill at a grinding energy of 6kWh/t. Table 3 gives the composition of the ground output material by particle size fraction.

**Table 3**

| PSF [µm] | WF (%) | LOI 950°C (%) | SiO₂ (%) | Al₂O₃ (%) | Fe₂O₃ (%) | CaO (%) | MgO (%) | K₂O (%) | Na₂O (%) | SO₃ (%) | CaO/ SiO₂ | CPC |
|---|---|---|---|---|---|---|---|---|---|---|---|---|
| <63 | 28,91 | 19,46 | 43,64 | 4,45 | 2,39 | 25,78 | 0,87 | 0,99 | 0,5 | 0,75 | **0,59** | **31** |
| 63-125 | 9,60 | 13,13 | 61,32 | 3,64 | 1,51 | 16,72 | 0,53 | 1,12 | 0,54 | 0,21 | **0,27** | **15** |
| 125-250 | 7,33 | 9,71 | 71,15 | 3,06 | 1,19 | 11,78 | 0,36 | 1,08 | 0,48 | <0.05 | **0,17** | **9** |
| 250-6000 | 54,16 | 16,76 | 55,84 | 2,39 | 0,95 | 21,22 | 0,44 | 0,77 | 0,38 | 0,11 | **0,38** | **11** |

Findings: A high amount of fines is obtained with a low CaO/SiO₂ ratio, indicating a high amount of remaining silica in the fine particles which is not desirable.

### Examples according to the invention

An 400 Watt laboratory mixer sold under the commercial name of Turbotest by VMI Mixing Solutions with a maximum rotation speed of 3300 rpm was used. The scrubber comprised a bench high rotation speed mixer paired with an impeller having three sets of blades (round full cylinders) with opposing pitches. The volume of the attrition cell is two liters.

The same concrete demolition waste was used as for the reference examples. The composition of the concrete demolition waste is given in Table 1.

To demonstrate the efficacy of the process according to the invention, concrete demolition waste of Table 1 was sieved beforehand to remove particles of size <250µm. By doing so, all fine particles with <250µm obtained after the attrition step could be attributed directly to the processing method with defined conditions. The obtained fine particles and their cement paste concentration are directly related to the process and can be separated from particles that were present already in the raw material.

The concrete demolition waste is poured into the attrition cell with a filling ratio of ~80 vol%, while the rotation speed is set at 500 rpm for a residence time of 15 minutes.

Tests were conducted with different proportions of water added to the concrete demolition waste.

The particle size distributions of the input material and of the processed output material with different proportions of water (0, 10, 15, 20, 25%) are shown in Table 4

**Table 4**

| PSF [mm] | Input (%) | Output 0% | Output 10% | Output 15% | Output 20% | Output 25% |
|---|---|---|---|---|---|---|
| 0-0.063 | 0,0 | 2,9 | 5,8 | 12,7 | 12,4 | 5,1 |
| 0.063-0.125 | 0,0 | 1,2 | 1,0 | 1,6 | 1,3 | 0,8 |
| 0.125-0.250 | 0,0 | 3,0 | 2,8 | 3,8 | 3,8 | 2,8 |
| 0.250-0.500 | 16,3 | 15,1 | 13,3 | 12,3 | 11,7 | 13,6 |
| 0.500-1.000 | 14,6 | 12,3 | 12,1 | 11,1 | 9,9 | 11,1 |
| 1.000-1.250 | 15,5 | 17,0 | 19,1 | 16,6 | 15,3 | 16,7 |
| 1.250-4.000 | 31,3 | 31,1 | 29,4 | 27,9 | 28,9 | 29,5 |
| 4.000-6.000 | 22,3 | 17,4 | 16,6 | 14,0 | 16,9 | 20,3 |

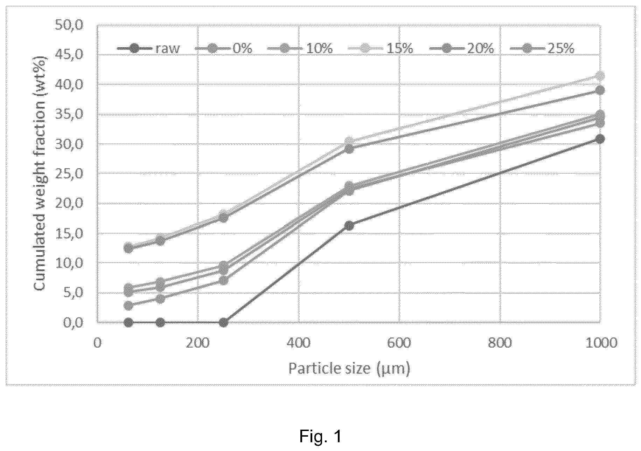

Fig. 1 shows a graph of the particle size distribution.

Table 5 shows the composition of the ground output material having a water content of 0% by particle size fraction, measured by X-ray fluorescence.

**Table 5**

| PSF [µm] | WF (%) | LOI 950°C (%) | SiO₂ (%) | Al₂O₃ (%) | Fe₂O₃ (%) | CaO (%) | MgO (%) | K₂O (%) | Na₂O (%) | SO₃ (%) | CaO/ SiO₂ | CPC |
|---|---|---|---|---|---|---|---|---|---|---|---|---|
| <63 | 2,89 | 21,1 | 38,4 | 5,13 | 2,82 | 27,93 | 1,05 | 0,95 | 0,52 | 0,99 | **0,73** | **41,3** |
| 63-125 | 1,15 | 17,1 | 50,38 | 4,46 | 2,19 | 21,61 | 0,78 | 1,06 | 0,59 | 0,54 | **0,43** | **28,7** |
| 125-250 | 2,99 | 16,33 | 53,2 | 4,09 | 1,79 | 21,31 | 0,64 | 1,08 | 0,54 | 0,4 | **0,40** | **22,4** |
| 250-6000 | 92,97 | 16,77 | 54,02 | 3,02 | 1,38 | 22,01 | 0,52 | 0,89 | 0,39 | 0,25 | **0,41** | **16,5** |

Table 6 shows the composition of the ground output material having a water content of 15% by particle size fraction, measured by X-ray fluorescence.

**Table 6**

| PSF [µm] | WF (%) | LOI 950°C (%) | SiO₂ (%) | Al₂O₃ (%) | Fe₂O₃ (%) | CaO (%) | MgO (%) | K₂O (%) | Na₂O (%) | SO₃ (%) | CaO/ SiO₂ | CPC |
|---|---|---|---|---|---|---|---|---|---|---|---|---|
| <63 | 12,69 | 22,35 | 35,09 | 4,9 | 2,65 | 30,84 | 1,03 | 0,91 | 0,45 | 1,07 | **0,88** | **41,4** |
| 63-125 | 1,58 | 12,81 | 63,01 | 3,76 | 1,57 | 15,92 | 0,48 | 1,12 | 0,62 | 0,16 | **0,25** | **16,4** |
| 125-250 | 3,83 | 11,77 | 66,25 | 3,3 | 1,26 | 14,9 | 0,37 | 1,1 | 0,54 | <0.05 | **0,22** | **10,9** |
| 250-6000 | 81,90 | 16,29 | 56,84 | 2,57 | 1 | 21,05 | 0,43 | 0,8 | 0,37 | 0,13 | **0,37** | **12,4** |

Findings: The effect of autogenous attrition in an attrition scrubber is demonstrated by the amount a fine fraction below 250pm and the cement paste concentration. The method of the invention increases the number of fine particles and is dependent on the moisture content of the raw material. As can be seen, the moisture content has an effect not only on the particle size distribution, with more fines being produced with an optimum between 15-20 wt.-%, but also on the cement paste concentration. As shown, the attrition scrubber results in a much higher cement paste concentration in the fines compared to the ball mill reference example.

## Claims

1. A method of processing construction demolition material to obtain particles having a high CaO/SiO₂ weight ratio, comprising the steps of:
a) providing input particles obtained by crushing construction demolition material,
b) subjecting the input particles to autogenous attrition in an attrition scrubber to obtain output particles comprising a fine fraction of output particles and a coarse fraction of output particles, said fine fraction having an increased CaO/SiO₂ weight ratio when compared to the coarse fraction,
c) separating the fine fraction from the coarse fraction by means of a separator.

2. The method according to claim 1, wherein the input particles have a maximum particle size of 10mm, preferably 6mm or 4mm.

3. The method according to claim 1 or 2, wherein the fine fraction has a particle size of < 250 µm, preferably < 125 µm, more preferably < 63 µm.

4. The method according to claim 1, 2 or 3, wherein the output particles have a particle size distribution having a D10 of < 250 pm, measured by laser diffraction.

5. The method according to any one of claims 1 to 4, wherein the construction demolition material is concrete demolition waste.

6. The method according to any one of claims 1 to 5, wherein the fine fraction has a CaO/SiO₂ weight ratio > 0,5. preferably > 0.6.

7. The method according to any one of claims 1 to 6. wherein the input particles are subjected to step b) in the form of an input material having a water content of < 30 wt.-%, preferably 7-30 wt.-%, more preferably 13-22 wt.-%.

8. The method according to claim 7, wherein, before step b), the input particles are mixed with water in order to obtain a water content of the input material of < 30 wt.-%, preferably 5-30 wt.-%, more preferably 13-22 wt.-%.

9. The method according to any one of claims 1 to 8, herein the attrition scrubber comprises at least one attrition cell and at least one impeller arranged to rotate in said at least one attrition cell.

10. The method according to claim 9, wherein the at least one impeller is driven to rotate at 5-1200 rpm, preferably 400-600 rpm.

11. The method according to claim 9 or 10, wherein the rotating impeller causes the input particles to abrade against each other generating surface abrasion.

12. The method according to any one of claims 1 to 11, wherein, after step c), the coarse fraction is recirculated into the attrition scrubber.

13. Use of an attrition scrubber for processing construction demolition material to obtain particles having a high CaO/SiO₂ weight ratio.

14. Use of the fine fraction obtained from the method according to any one of claims 1 to 12 as a component in Portland cements, or as a component of a raw meal mixture for the preparation of Portland clinker.
